# EUROPÄISCHE PATENTSCHRIFT

(11) **EP 1 118 175 B1**
(45) Veröffentlichungstag und Bekanntmachung des Hinweises auf die Patenterteilung: **26.03.2003**
(21) Anmeldenummer: 99969861.6
(22) Anmeldetag: 29.09.1999
(51) Int. Cl.: H04B 7/26

(54) **VERFAHREN ZUM RÜCKWIRKUNGSFREIEN BETREIBEN VON MINDESTENS ZWEI BASISSTATIONEN**
METHOD FOR LOW-DISTURBANCE OPERATION OF AT LEAST TWO BASE STATIONS
PROCEDE POUR FAIRE FONCTIONNER SANS PERTURBATION AU MOINS DEUX STATIONS DE BASE

(30) Priorität: 30.09.1998 DE 19845040
(43) Veröffentlichungstag der Anmeldung: 25.07.2001
(73) Patentinhaber: SIEMENS AKTIENGESELLSCHAFT, 80333 München (DE)
(72) Erfinder: SCHWARK, Uwe, D-46399 Bocholt (DE); BOLINTH, Edgar, D-41189 Mönchengladbach (DE); ARETZ, Kurt, D-46419 Isselburg (DE); KAMPERSCHROER, Erich, D-46499 Hamminkeln (DE)
(86) Internationale Anmeldenummer: DE9903138
(87) Internationale Veröffentlichungsnummer: WO00019631

(56) Entgegenhaltungen:
- EP-A- 0 865 172
- WO-A-97/24820
- WO-A-98/39939
- US-A- 5 864 549
- JUNG P ET AL: "A JOINT DETECTION CDMA MOBILE RADIO SYSTEM CONCEPT DEVELOPED WITHIN COST 231" PROCEEDINGS OF THE VEHICULAR TECHNOLOGY CONFERENCE,US,NEW YORK, IEEE, Bd. CONF. 45, 1995, Seiten 469-473, XP000550217 ISBN: 0-7803-2743-8

## Beschreibung

Die Erfindung betrifft ein Verfahren zum rückwirkungsfreien Betreiben von mindestens zwei, vorzugsweise Inhouse-UMTS (Universal Mobile Telecommunication System)-Basisstationen mit teilweise überlappenden Funkfeldern in einem Telekommunikations-Funkzellennetz, wobei die Basisstationen Kommunikationsinformationen im CDMA (Code Division Multiple Access)-Mehrfachzugriffsverfahren übertragen, sowie eine Basisstation und eine Mobilstation zum rückwirkungsfreien Betreiben in einem universellen Mobiltelekommunikationssystem.

Es ist bekannt, in drahtlosen Kommunikationssystemen physikalische Kanäle zur Übertragung von Nachrichten oder Daten zu nutzen. Durch Nutzung derartiger physikalischer Kanäle wird die Kommunikationsinformation, beispielsweise in Form von real time video Sprachdaten oder neu real time Daten, über eine Luftschnittstelle von einer ersten Station zu einer zweiten Station übermittelt. Bei Duplexfunkverbindungen erfolgt ein Informationsaustausch auch in Gegenrichtung über dieselbe Luftschnittstelle.

Parameter der physikalischen Kanäle sind beispielsweise in einem TDMA (Time Division Multiple Access)-Funk-Kommunikationssystem ein bestimmter Zeitschlitz, in einem FDMA (Frequency Division Multiple Access)-Funk-Kommunikationssystem eine bestimmte Trägerfrequenz, die bei der Übermittlung der Kommunikationsinformation genutzt wird, und in einem CDMA (Code Division Multiple Access)-Funk-Kommunikationssystem ein bestimmter Code, mit dem die Kommunikationsinformation zur Funkübertragung codiert wird. Auch sind Kombinationen der bekannten Vielfachzugriffsverfahren TDMA, FDMA und CDMA möglich.

In einem bekannten Mobilfunksystem, insbesondere dem sogenannten GSM-System (Global System for Mobile Telecommunication), wird die Vergabe der Funkkanäle, über die zwischen einer bestimmten Basisstation und einem bestimmten Mobilteil Kommunikationsinformationen übertragen werden können, zentral durch eine Koordinationseinheit vorgenommen. Die Koordinationseinheit weist unter Berücksichtigung spezieller Landbedingungen (z.B. der a priori berechneten Interferenzsituation) den einzelnen Steuereinheiten der GSM-Basisstationen eine bestimmte Anzahl von Funkkanälen zu.

Weiterhin existieren Funk-Kommunikationssysteme, welche im sogenannten unkoordinierten Betrieb arbeiten. In derartigen Systemen werden die Funkkanäle nicht zentral für das gesamte System vergeben, sondern es suchen sich die an einer aufzubauenden Funkverbindung beteiligten Funkstationen die betreffenden Kanäle aus einem vorhandenen Kanalvorrat nach bestimmten Kriterien aus. Ein Beispiel für eine Funkstation, die im oben erwähnten unkoordinierten Betrieb arbeitet, sind diejenigen Stationen nach dem DECT-Standard.

Es werden also in bekannten Funk-Kommunikationssystemen, insbesondere in einem GSM, einem System nach DECT-Standard oder im zukünftigen UMTS Duplex-Funkverbindungen aufgebaut, um bidirektional Daten auch größerer Datenraten, Sprachinformation oder allgemein Kommunikationsinformationen anderer Dienste über eine Funkschnittstelle zu übertragen. Bekannt sind hier insbesondere das sogenannte TDD (Time Division Duplex)-Verfahren, bei dem ein erster Funkkanal und ein zweiter Funkkanal derselben Duplex-Funkverbindung verschiedene Zeitschlitze derselben Trägerfrequenz nutzen.

Das Mobilfunksystem UMTS der dritten Generation soll sowohl den herkömmlichen sogenannten Outdoor- als auch den Inhouse-Bereich abdecken. Für die optimale Funktion eines derartigen Mobilfunksystems ist die vorgesehene Ressourcenplanung inhärent gegeben - eine explizite Frequenzplanung ist nicht notwendig. Während im Outdoor-Bereich unter starken Interferenzbedingungen (Nachbar-Basisstation stört) ein Hand-Over zur Nachbar-Basisstation gemacht wird, kann dies bei Inhouse-Basisstationen nicht geschehen. Daher ist hier eine effektive Methode der Interferenzeliminierung (Synchronisation → Midambel → Interferenzen) für eine hohe spektrale Effizienz des Systems maßgebend. Bei einem Mobilfunksystem, welches sowohl den quasi öffentlichen als auch den privaten Bereich abdeckt, ergibt sich für den Betreiber die Schwierigkeit, daß im privaten Bereich aufgestellte Heim-Basisstationen nicht unter Kontrolle des Betreibers stehen und daher nicht netzwerkseitig gesteuert werden können.

In dem Fall, wenn aufgrund zunehmender Verbreitung derartiger Heim-Basisstationen diese in unmittelbarer Nachbarschaft befindlich sind, was beispielsweise in einem Mehrfamilienhaus der Fall ist, dann können sich die Funkfelder der einzelnen Heim-Basisstationen überlappen mit der Folge gegenseitigen Störens sowie eingeschränkter oder durch Interferenzen verschlechterter Funkübertragung.

Bei der DECT-Struktur wird quasi selbstorganisierend von den Teilnehmern des jeweiligen lokalen Netzes vor Verbindungsaufbau derjenige Kanal selektiert, welcher einen ungestörten Verbindungsaufbau zur Datenübertragung gestattet. In dem Fall, wenn Störungen auftreten, erfolgt ein für den Nutzer in der Regel nicht wahrnehmbarer Kanalwechsel zu einem wiederum störungsfreien oder störungsfreieren Kanal. Dadurch, daß bei dem DECT-System die Funk-Kommunikation unter TDMA realisiert ist, ist ein Kanalwechsel auch bei fehlender Synchronisation zwischen den Teilnehmern, d.h. beim Wechsel zu einer anderen Basisstation wenig problematisch.

Schwierigkeiten entstehen jedoch dann, wenn das Mehrfachzugriffsverfahren CDMA für ein universelles Mobilfunksystem. Anwendung finden soll. Dort ist die Chipsynchronität, d.h. die Verwendung von orthogonal zueinander stehenden CDMA-Codes Voraussetzung für das Verhindern von Störungen durch die Nutzer bzw. zum Erhalt der optimalen spektralen Netzeffizienz. Werden in einem solchen System mehrere Basisstationen asynchron betrieben, sind aufgrund der fehlenden Orthogonalität der CDMA-Codes starke.Störungen und unter Umständen erhebliche Kapazitätseinbußen zu verzeichnen, insbesondere dann, wenn auch im Inhouse-Bereich hochbitratige Datendienste über das System abgewickelt werden oder in Anspruch genommen werden sollen.

Aus der EP 0 865 172 A2 ist ein Verfahren zum Betreiben von mindesten zwei sich überlagernder Drahtlos-Kommunikationssysteme bekannt, wobei es sich bei den zwei Kommunikationssystemen um zumindest ein Indoor- und ein Outdoor-Kommunikationssystem handelt und wobei zum interferenzfreien Betreiben der beiden Systeme bestehende Funkverbindungen im Inhouse-Bereich über Zeitschlitze gemäß einem Zeitduplex-Verfahren abwickelt werden und zugleich diese Zeitschlitze genutzt werden, um für bestehende Funkverbindungen im Outdoor-Bereich genutzte Funkkanäle zu überwachen, so dass ein schnelles Reagieren auf sich ändernde Verkehrsanforderungen bzw. Reagieren auf Interferenzen möglich ist.

Es ist daher Aufgabe der Erfindung, ein Verfahren zum rückwirkungsfreien Betreiben von mindestens zwei Inhouse-UMTS-Basisstationen mit teilweise überlappenden Inhouse-Funkfeldern in einem Telekommunikations-Funkzellennetz anzugeben, wobei davon auszugehen ist, daß die Basisstationen Kommunikationsinformationen nach dem CDMA-Prinzip, d.h. Mehrfachzugriffsverfahren übertragen. Mittels der Erfindung soll die spektrale Effizienz durch optimale Nutzung der Netzgegebenheiten erhöht werden, ohne daß ein breites Frequenzspektrum speziell für die Inhouse-Anwendung reserviert werden muß. Gleichzeitig soll mit der Erfindung eine Verbesserung der Signal- oder Datenübertragungsqualität erreicht werden, so daß auch im Bereich hoher lokaler Dichte der Basisstationen ausreichend Kanalkapazität zur Datenübertragung zur Verfügung steht.

Die Lösung der Aufgabe der Erfindung erfolgt mit einem Verfahren gemäß Definition nach Patentanspruch 1.

Demgemäß besteht der verfahrensseitige Grundgedanke der Erfindung darin, daß die mindestens zwei beteiligten Basisstationen, die sich teilweise überlappende Funkfelder aufweisen, zum Eliminieren störender Interferenzen eben aufgrund der überlappenden Funkfelder und nicht mehr gegebenen Möglichkeit des Ausweichens auf zwei Frequenzen eine Eigensynchronisations-Prozedur ausführen. Im Ergebnis dieser Eigensynchronisations-Prozedur wird Chipsynchronität erreicht, und somit gesichert, daß Orthogonalität der Codes des Mehrfachzugriffsverfahrens der beteiligten, benachbarten Basisstationen hergestellt wird.

In bevorzugter Weiterbildung der Erfindung wird von einem reservierten Inhouse-Frequenzbereich im UMTS-System ausgegangen, wobei beim Senden einer Basisstation in einem derartigen reservierten Inhouse-Frequenzbereich die hinzukommende weitere Basisstation zunächst prüft, ob die gewünschte, gewählte Frequenz frei oder besetzt ist. In dem Fall, daß die hinzugekommene Basisstation eine besetzte Frequenz selektiert, wird auf eine freie Frequenz im reservierten Frequenzbereich oder Frequenzband ausgewichen.

Dann, wenn ein gleichzeitiges Betreiben einer Vielzahl von Basisstationen vorliegt, so daß es zu einem vollständigen Auslasten des reservierten Frequenzbereichs kommt oder mit der hinzugetretenen Basisstation eine solche Folge eintritt, wählt die jeweils hinzukommende Station eine minimal interferierende Frequenz bzw. eine Frequenz mit geringstem Störungsanteil aus und detektiert die Basisstation entsprechend. Im Anschluß daran wird zu dieser detektierten Basisstation bzw. zur nächstliegenden Basisstation Chipsynchronität entsprechend den CDMA-Maßgaben hergestellt.

Die erfindungsgemäß vorgeschlagene Eigensynchronisationsprozedur unterscheidet sich von standardisierten Synchronisationsprozeduren für den koordinierten Betrieb, welche zentral gesteuert werden, durch eine dezentrale Arbeitsweise.

Das heißt, es wird von jeder Basisstation innerhalb der eigenen Zelle eine Veranlassung und Steuerung der Synchronisationsprozedur vorgenommen. Diese Synchronisation eignet sich bevorzugt für unkoordinierte Mehrzellen-Systeme und stellt die erforderliche Synchronität der beteiligten Basisstationen her.

Erfindungsgemäß ist für die Eigensynchronisationsprozedur in den von den Basisstationen gesendeten Übertragungsrahmen ein reservierter Synchronisationskanal SCH mit Synchronisationssignal vorgesehen, wobei dieses Signal bei Empfang durch die hinzugekommene bzw. hinzukommenden Basisstationen das Herstellen der Chipsynchronität zwischen den beteiligten Stationen ermöglicht. Bei hergestellter Chipsynchronität ist die hinzugekommene Basisstation in der Lage, in einem reservierten Random-Access-Kanal RACH das Synchronisationssignal zu empfangen.

Der reservierte SCH ist regelmäßig ein Downlink- und der reservierte RACH ein Uplink-Kanal, welche in einem periodischen Abstand alternierend übertragen werden.

In dem Fall, wenn weitere hinzukommende Basisstationen zu synchronisieren sind, erfolgt ein Aufsynchronisieren auf den Synchronisationskanal mit der stärksten Empfangsfeldstärke bzw. Sendeleistung gemäß Zeitschlitzraster.

Die Basisstationen können erfindungsgemäß einen internen Zufallsgenerator aufweisen, welcher für die jeweilige Basisstation einen Funktionstausch oder Belegungstausch der Zeitschlitze für den Synchronisationskanal und den Random-Access-Kanal veranlaßt, wodurch auch bei Ausfall der Synchronisations-Referenzstation ein erneutes Synchronisieren möglich ist.

Letztendlich kann jede Basisstation auf dem Synchronisationskanal oder auf einem anderen Kanal Informationen über die bereits in der Zelle benutzten CDMA-Codes übertragen. Diese Information kann von den übrigen beteiligten Basisstationen, aber auch von den Mobilstationen empfangen und in Zusammenhang mit der anhand der Midambel durchgeführten Kanalschätzung zur Minimierung oder Eliminierung der Intrazell- und der Interzell-Interferenzen genutzt werden, wodurch sich eine verbesserte spektrale Effizienz ergibt.

Nach Abschluß der Synchronisationsprozedur zwischen den Basisstationen wird in an sich bekannter Weise eine Synchronisation zum Mobilteil vorgenommen, so daß nach erfolgter Sekundärsynchronisation der Verbindungsaufbau zum Übertragen und Austausch von Nachrichten erfolgen kann.

Ein weiterer Aspekt des Verfahrens besteht darin, daß eine User- oder Basisstationsdetektion dadurch möglich ist, daß jede Basisstation eine spezielle Midambel sendet. Anhand der gesendeten Midambel ist eine Kanalschätzung möglich, die die Übertragungskanäle zwischen Mobilstation und bis zu 8-Inhouse-Basisstationen schätzt. Diese Kanalübertragungsfunktion wird nun zum Ermitteln und Beseitigen der Störsignale (Interferenzeliminierung) benutzt. Die Zeitschlitz- und Chipsynchronität ist dabei wesentliche Voraussetzung für ein verwertbares Kanalschätzungsergebnis. Grundsätzlich läßt sich hierdurch die spektrale Effizienz in der jeweiligen lokalen Funkzelle verbessern.

Mittels des erfindungsgemäßen Verfahrens kann über das Prinzip der Zeitschlitzsynchronisation die Möglichkeit geschaffen werden, mehrere Heim-Basisstationen auf derselben Frequenz, aber in unterschiedlichen Zeitschlitzen senden zu lassen, ohne daß gegenseitige Störungen auftreten. Die erreichte chipgenaue Synchronisation der Stationen ermöglicht darüber hinaus eine höhere spektrale Effizienz derart, daß mehrere Mobilteile, die jeweils verschiedenen Basisstationen zugeordnet sind, störungsfrei auf derselben Frequenz im selben Zeitschlitz arbeiten können, wobei hier die CDMA-Komponenten optimal ausgenutzt werden. Damit besteht die Möglichkeit, im Inhouse-Bereich Anwendungen mit hochratigen Datenübertragungsmengen zu erschließen, ohne daß das öffentliche Netz in Anspruch genommen werden muß. Es wird also verfahrensseitig eine Synchronisation von Heim-Basisstationen lokal, d.h. außerhalb der Einflußsphäre einer zentral gesteuerten Ressourcenplanung erreicht, wobei ein guter Empfang der orthogonalen Codes gewährleistet ist.

Die Erfindung soll nachstehend anhand eines Ausführungsbeispiels sowie von Figuren näher erläutert werden.

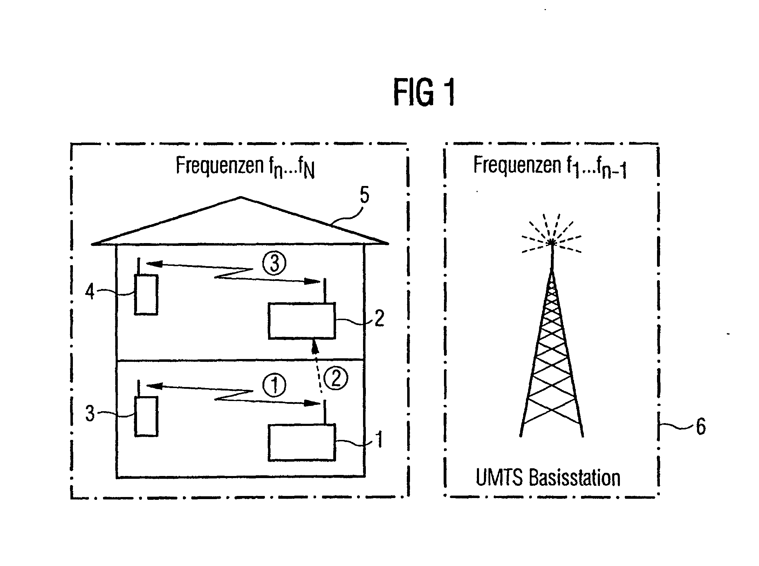

Fig. 1 zeigt hierbei ein mögliches Szenario, bei welchem zwei Inhouse- öder Heim-Basisstationen sich bedingt durch die gegebenen Empfangsbedingungen innerhalb eines Gebäudes potentiell mit der Folge von entsprechenden Interferenzen stören.

Fig. 2 stellt Frame-Strukturen der beteiligten Basisstationen dar.

Grundsätzlich wird davon ausgegangen, daß für UMTS-Anwendungen im lokalen Bereich ein separates Frequenzband mit entsprechend reservierten Frequenzen (fₙ...f_{N}) zur Verfügung gestellt wird. Die dann quasi übergeordneten zellularen UMTS-Mobilfunkanwendungen werden im Frequenzbereich f₁...fₙ₋₁ abgewickelt.

Ausgehend von dem reservierten Frequenzbereich wird nun bei den beispielhaft gezeigten zwei Basisstationen 1 und 2, die sich in einem Gebäude 5 befinden, vor Verbindungsaufbau unter Nutzung einer gewählten Frequenz geprüft, ob womöglich diese Frequenz nicht bereits besetzt ist. Hierfür besitzen die Basisstationen 1 und 2 entsprechende Empfangseinrichtungen zum Erfassen weiterer aktiver Systeme sowie eine Kanal- oder Frequenzselektionsbaugruppe, mit deren Hilfe eine Änderung oder Auswahl eines Kanals oder einer Frequenz möglich ist.

Falls die zu aktivierende Basisstation feststellt, daß die gewählte Frequenz bereits besetzt ist, wird auf eine im Bereich (fₙ...f_{N}) noch freie Frequenz bzw. einen entsprechenden anderen Kanal ausgewichen.

In dem Fall, wenn die benachbarten Basisstationen auf allen im Bereich fₙ...f_{N} zur Verfügung stehenden Frequenzen aktiv sind, d.h. keine freie Frequenz zur Verfügung steht, prüft die hinzukommende Basisstation die momentane Störcharakteristik und ermittelt diejenige Frequenz, auf der nur minimale oder die geringsten Interferenzen empfangen werden. Nach der entsprechenden Detektion dieser Frequenzen und damit der dort kommunizierenden Basisstation erfolgt das Einleiten der Synchronisation mit dem Ziel der Chipsynchronität.

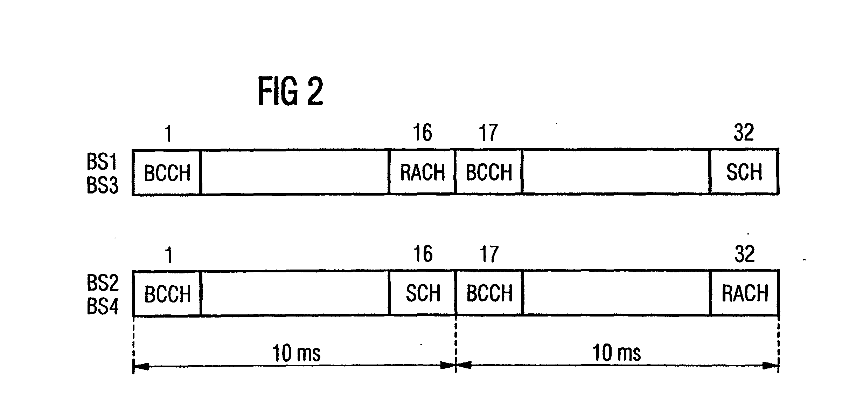

Die Fig. 2 stellt Frame-Strukturen der beteiligten Basisstationen für die Eigensynchronisation dar. Die in der Figur gewählten Bezeichnungen für die Basisstationen BS1, BS2 und so weiter dienen gleichzeitig dem Verdeutlichen der Reihenfolge der durchzuführenden Eigensynchronisationsprozeduren.

Ausgangspunkt bildet die sich in Betrieb befindliche Basisstation BS1, wobei hier vollständig belegte Nachbarfrequenzen vorausgesetzt werden.

Die Basisstation BS2 möchte sich nun zur Basisstation BS1 synchronisieren und empfängt die Frame-Struktur wie dargestellt. Hierbei sucht die Basisstation BS2 ein spezielles Signal bzw. den Synchronisationskanal SCH, anhand dessen Chipsynchronität zur Basisstation BS1 hergestellt werden kann. Die Basisstation BS2 ist nun ebenfalls in der Lage, auf einen sogenannten Random Access-Kanal RACH den Synchronisationskanal SCH der Basisstation BS1 zu empfangen.

Der RA-Kanal kann derselbe Kanal sein, den eine Mobilstation benutzt, um bei der Basisstation den Aufbau einer Telefonverbindung anzufordern. Die Kanäle RACH und SCH sind dabei spezielle reservierte Kanäle, wobei SCH ein Downlink- und der RACH ein Uplink-Kanal ist, die in einem bestimmten periodischen Abstand abwechselnd übertragen werden.

Beim gezeigten Beispiel ist die Periode gleich 2, wobei RACH und SCH beispielsgemäß alle zwei Frames einmal übertragen werden. Ein Frame entspricht dabei 16 Zeitschlitzen.

Kommt eine weitere Basisstation, beispielsweise die Basisstation BS3 hinzu, so sucht diese den oder die Synchronisations-Kanäle SCH mit der stärksten Sendeleistung und synchronisiert sich auf dieses Zeitschlitzraster chipsynchron auf, wie in der Figur gezeigt. Eine hinzukommende Basisstation BS4 würde dann bei gleich stark empfangener Sendeleistung der Basisstationen BS1 bis BS3 sich auf die Basisstation BS1 und BS3 synchronisieren und so weiter.

In dem Fall, daß die Sendeleistung der Basisstation BS2 die Summe aller anderen Synchronisations-Kanäle (Basisstation BS1 und Basisstation BS3) übersteigt und die Basisstation BS4 neu hinzukommt, würde sich die Basisstation BS4 auf die Basisstation BS2 synchronisieren. Im Fall eines Funktionsausfalls der Basisstation BS2, z.B. durch Netzunterbrechung, würden die verbleibenden Basisstationen BS1, BS3 und BS4 kein Referenz-Synchronisationssignal, nämlich den Synchronisationskanal von BS2 mehr empfangen. Daher müssen für den stabilen Betrieb in einem solchen Szenario entsprechende Vorkehrungen getroffen werden. Hierfür wird über einen internen Zufallsgenerator jeder einzelnen Basisstation ein Zeitpunkt mitgeteilt, in dem die Funktion der Zeitschlitze von Synchronisations- und Random Access-Kanal vertauscht werden. Angenommen, die Basisstation BS1 würde als erste die Position von RACH (vorerst Slot 16) und SCH (vorerst Slot 32) in den Zeitschlitzen vertauschen, führt dies dazu, daß RACH (nachher Slot 32) und SCH (nachher Slot 16) übertragen wird, so daß die Basisstationen BS3 und BS4 wieder ein Referenz-Synchronisationssignal empfangen können, wodurch das System stabil ist.

Weiterhin kann jede Basisstation auf dem Synchronisationskanal oder einem weiteren Kanal Informationen über in der jeweiligen Zelle bereits benutzte CDMA-Codes übertragen. Diese Informationen können von den anderen Basisstationen, aber auch von den Mobilstationen empfangen und in Zusammenhang mit der anhand der Midambel durchgeführten Kanalschätzung zur Minderung oder Eliminierung der Intrazell- und der Interzell-Interferenzen genutzt werden, wodurch sich eine Verbesserung der spektralen Effizienz einstellt. Bezüglich der Fig. 2 sei noch angemerkt, daß mit BCCH der Broadcast-Control-Kanal bezeichnet ist.

Nach erfolgter Eigensynchronisation, d.h. im Erreichen der Verwendung von orthogonalen CDMA-Codes der beteiligten Stationen wird in an sich bekannter Weise die Synchronisation zum entsprechenden Mobilteil vorgenommen und es erfolgt der Verbindungsaufbau.

Die beschriebene Abwicklungsprozedur ermöglicht einen chipsynchronen Betrieb benachbarter Basisstationen und entsprechender Mobilteile, wobei infolge korrekter Orthogonalität der CDMA-Codes gegenseitige Störungen ausgeschlossen werden und eine optimale Nutzung des Frequenzspektrums möglich ist.

In dem Fall, wenn UMTS-Einrichtungen eine Luftschnittstelle mit einem TD-CDMA (Time Division - Code Division Multiple Access)-Standard nutzen, kann über die Zeitschlitzsynchronisation erreicht werden, daß mehrere beteiligte Basisstationen auf derselben Frequenz in unterschiedlichen Zeitschlitzen senden, ohne daß gegenseitige Störungen auftreten. Weiterhin besteht die Möglichkeit, daß mehrere Mobilteile, die verschiedenen Basisstationen zugeordnet werden, störungsfrei auf derselben Frequenz im selben Zeitschlitz aktiv sind, so daß die im CDMA innewohnenden Vorteile und Komponenten optimal ausgenutzt werden können.

Gemäß der Figur wird der Verfahrensablauf durch die Hardwarekomponenten unter Beachtung der reservierten Frequenzen fₙ...f_{N}, welche außerhalb des Frequenzbereichs f₁...fₙ₋₁ der UMTS-Basisstation 6 liegen, wie folgt realisiert.

In einem ersten Schritt erfolgt eine an sich bekannte Synchronisation und ein Gesprächsaufbau zwischen dem ersten Mobilteil 3 und der ersten Basisstation 1. Wenn die zweite Basisstation 2 aktiviert werden soll und beide Stationen 1 und 2 auf derselben Frequenz senden und keine weiteren freien Frequenzen zur Verfügung stehen, wird eine Synchronisation der Basisstation 2 auf die Basisstation 1 vorgenommen. In einem nächsten Schritt wird das zweite Mobilteil 4 auf die zweite Basisstation 2 synchronisiert. Nach Wahl eines noch nicht belegten Kanals gemäß CDMA-Code oder eines entsprechenden Zeitschlitzes kann dann der Gesprächsaufbau zwischen dem Mobilteil 4 und der Basisstation 2 eingeleitet werden, ohne daß trotz gleicher Sende- und Empfangsfrequenz der beteiligten Basisstationen 1 und 2 Störungen auftreten.

Es sei darauf aufmerksam gemacht, daß lediglich aus den Gründen einer einfachen Darstellung nur zwei Basisstationen und zwei Mobilteile figürlich dargestellt wurden. Selbstverständlich lassen sich im Rahmen der zur Verfügung stehenden Codes und unter Beachtung des Spreizfaktors sowie gemäß dem Frequenzbereich fₙ...f_{N} eine wesentlich größere Zahl von Basisstationen in unmittelbarer Nachbarschaft störungsfrei betreiben, ohne das mit der Erfindung beschriebene Prinzip zu verlassen.

## Patentansprüche

1. Verfahren zum rückwirkungsfreien Betreiben von mindestens zwei nach dem CDMA, Code Division Multiple Access-Prinzip arbeitenden Basisstationen in einem universellen Mobiltelekommunikationssystem, vorzugsweise Inhouse-Basisstationen, mit teilweise überlappenden Funkfeldern untereinander und/oder zu einem Telekommunikations-Funkzellennetz, wobei die mindestens zwei Basisstationen zum Eliminieren störender Interferenzen aufgrund überlappender Funkfelder und gleicher Sendefrequenz eine Eigensynchronisations-Prozedur ausführen, und wobei im Ergebnis dieser Prozedur Chipsynchronität der benachbarten Basisstationen und orthogonalität der Codes des CDMA Mehrfachzugriffsverfahrens hergestellt wird, **dadurch gekennzeichnet, daß**
- für die Eigensynchronisationsprozedur in den von den Basisstationen gesendeten Übertragungsrahmen ein reservierter Synchronisationskanal SCH mit Synchronisationssignal vorhanden ist, wobei dieses Signal bei Empfang durch die hinzugekommene Basisstation das Herstellen der Chipsynchronität zwischen den beteiligten Basisstationen ermöglicht,
- bei hergestellter Chipsynchronität die hinzugekommene Basisstation in einem reservierten Random-Access-Kanal RACH das Synchronisationssignal empfängt.

2. Verfahren nach Anspruch 1,
**dadurch gekennzeichnet,**
**daß** beim Senden einer Basisstation in einem festgelegten, reservierten Inhouse-Frequenzbereich die hinzukommenden weiteren Basisstationen zunächst prüfen, ob die gewünschte Frequenz frei oder besetzt ist und im Fall einer besetzten Frequenz auf eine freie Frequenz im reservierten Frequenzbereich ausweichen.

3. Verfahren nach Anspruch 2,
**dadurch gekennzeichnet,**
**daß** beim gleichzeitigen Betreiben einer Vielzahl von Basisstationen in einem ausgelasteten Frequenzbereich oder mit der Folge einer solchen Auslastung, die jeweils hinzukommende Station eine minimal interferierende Frequenz auswählt und Chipsynchronität zur Interferenz verursachenden und/oder nächstliegenden Basisstation herstellt.

4. Verfahren nach einem der vorangegangenen Ansprüche,
**dadurch gekennzeichnet,**
**daß** nach Abschluß der Eigensynchronisationsprozedur zwischen den Basisstationen in an sich bekannter Weise eine Sekundär-Synchronisation zum jeweiligen Mobilteil sowie der Verbindungsaufbau zum Übertragen und Austausch von Nachrichten erfolgt.

5. Verfahren nach einem der vorangegangenen Ansprüche,
**dadurch gekennzeichnet,**
**daß** anhand einer gesendeten Midambel eine Kanalschätzung zwischen Mobilstation und Basisstationen erfolgt und die hieraus resultierende Kanalübertragungsfunktion zum Ermitteln und Eliminieren von Störsignalen verwendet wird.

6. Verfahren nach Anspruch 1,
**dadurch gekennzeichnet,**
**daß** der reservierte Kanal SCH ein Downlink- und der reservierte Kanal RACH ein Uplink-Kanal ist, welche in einem periodischen Abstand alternierend übertragen werden.

7. Verfahren nach Anspruch 1 oder 6
**dadurch gekennzeichnet,**
**daß** weitere hinzukommende Basisstationen sich auf den oder die Synchronisationskanalkanäle mit der stärksten Empfangsfeldstärke oder sendeleistung zeitrastergemäß synchronisieren.

8. Verfahren nach einem der Ansprüche 1, 6 oder 7,
**dadurch gekennzeichnet,**
**daß** jede der Basisstationen einen internen Zufallsgenerator aufweist, welcher für die jeweilige Basisstation einen Funktionstausch oder Belegungstausch der Zeitschlitze für den Synchronisationskanal und den Random Access-Kanal veranlaßt, wodurch auch bei Ausfall der Synchronisations-Referenzstation ein erneutes Synchronisieren möglich ist.

9. Verfahren nach einem der Ansprüche 1, 6 bis 8 oder Anspruch 5,
**dadurch gekennzeichnet,**
**daß** in einem vorgegebenen Kanal die Basisstationen Informationen über bereits benutzte CDMA-Codes übertragen, wobei diese Informationen von den beteiligten Mobil- und Basisstationen zur Minimierung der Interferenzen nutzbar sind.

## Claims

1. Method for disturbance-free operation of at least two base stations working according to the CDMA, Code Division Multiple Access, principle in a universal mobile telecommunications system, preferably in-house base stations, with partially overlapping radio fields relative to one another and/or with respect to a telecommunications radio cell network, the at least two base stations performing an autosynchronization procedure for the purpose of eliminating disturbing interferences on account of overlapping radio fields and an identical transmission frequency, chip synchronism of the adjacent base stations and orthogonality of the codes of the CDMA multiple access method being produced as the result of said procedure,
**characterized in that**
- for the autosynchronization procedure, a reserved synchronization channel SCH with synchronization signal is present in the transmission frames transmitted by the base stations, said signal, upon reception by the additional base station, enabling the production of chip synchronism between the participating base stations,
- in the event of chip synchronism being produced, the additional base station receives the synchronization signal in a reserved random access channel RACH.

2. Method according to Claim 1,
**characterized**
**in that** during the transmission of one base station in a defined, reserved in-house frequency range, the additional further base stations firstly check whether the desired frequency is free or busy and, in the case of an busy frequency, fall back to a free frequency in the reserved frequency range.

3. Method according to Claim 2,
**characterized**
**in that** during the simultaneous operation of a multiplicity of base stations in a frequency range utilized to capacity or with the consequence of such capacity utilization, the respective additional station selects a minimally interfering frequency and produces chip synchronism with respect to the interference-causing and/or nearest base station.

4. Method according to one of the preceding claims,
**characterized in that** after the conclusion of the autosynchronization procedure between the base stations, in a manner known per se, a secondary synchronization with respect to the respective mobile part and also the connection set up for the transmission and exchange of messages are carried out.

5. Method according to one of the preceding claims,
**characterized**
**in that**, using a transmitted midamble, a channel estimation between the mobile station and base station/stations is carried out and the channel transfer function resulting from this is used for determining and eliminating interference signals.

6. Method according to Claim 1,
**characterized**
**in that** the reserved channel SCH is a downlink channel and the reserved channel RACH is an uplink channel, which are alternately transmitted at a periodic interval.

7. Method according to one of Claims 1 or 6,
**characterized**
**in that** further additional base stations are synchronized, in a timing-pattern-conforming manner, with the synchronization channel/channels having the highest received field strength or transmission path.

8. Method according to one of Claims 1, 6 or 7,
**characterized**
**in that** each of the base stations has an internal random number generator which initiates, for the respective base station, a function exchange or allocation exchange of the time slots for the synchronization channel and the random access channel, as a result of which renewed synchronization is possible even in the event of failure of the synchronization reference station.

9. Method according to one of Claims 1, 6 to 8 or Claim 5,
**characterized**
**in that**, in a predetermined channel, the base stations transmit information about CDMA codes already used, this information being able to be utilized by the participating mobile and base stations for the purpose of minimizing the interferences.

## Revendications

1. Procédé pour faire fonctionner sans rétroaction au moins deux stations de base travaillant selon le principe CDMA, Code Division Multiple Access, dans un système de télécommunication mobile universel, de préférence des stations de base en intérieur dites Inhouse, avec des champs radio se chevauchant partiellement entre elles et/ou vers un réseau cellulaire radio de télécommunication, dans lequel les au moins deux stations de base exécutent une procédure de synchronisation particulière pour éliminer des interférences parasitaires en raison de champs radio se chevauchant et de fréquences d'émission identiques et dans lequel, en résultat de cette procédure, le synchronisme de puce des stations de base voisines et l'orthogonalité des codes du procédé d'accès multiple CDMA sont établis,
**caractérisé par le fait que**
- pour la procédure de synchronisation particulière, un canal de synchronisation réservé SCH avec signal de synchronisation est présent dans la trame de transmission émise par les stations de base, ce signal permettant lors de la réception par la station de base ajoutée l'établissement du synchronisme de puce entre les stations de base concernées,
- une fois le synchronisme de puce établi, la station de base ajoutée reçoit le signal de synchronisation dans un canal réservé à accès aléatoire RACH.

2. Procédé selon la revendication 1,
**caractérisé par le fait que**, lors de l'émission d'une station de base dans une plage fréquentielle en intérieur, Inhouse, réservée et fixée, les autres stations de base à ajouter testent d'abord si la fréquence souhaitée est libre ou occupée et, dans le cas d'une fréquence occupée, elles ont recours à une fréquence libre dans la plage fréquentielle réservée.

3. Procédé selon la revendication 2,
**caractérisé par le fait que**, lors du fonctionnement simultané de plusieurs stations de base dans une plage fréquentielle totalement chargée ou avec pour conséquence une charge de ce genre, la station respectivement à ajouter sélectionne une fréquence avec un minimum d'interférences et établit un synchronisme de puce avec la station de base provoquant l'interférence et/ou la plus proche.

4. Procédé selon l'une des revendications précédentes,
**caractérisé par le fait que**, après la fin de la procédure de synchronisation particulière entre les stations de base, on effectue une synchronisation secondaire de manière connue vers la partie mobile respective ainsi qu'un établissement de liaison pour la transmission et l'échange de données.

5. Procédé selon l'une des revendications précédentes,
**caractérisé par le fait qu'**on effectue une estimation de canal entre la station mobile et la station de base à l'aide des mi-ambules émis et on utilise la fonction de transmission de canal résultant de cette estimation pour la détermination et l'élimination de signaux parasitaires.

6. Procédé selon la revendication 1,
**caractérisé par le fait que** le canal réservé SCH est un canal à liaison descendante et le canal réservé RACH est un canal à liaison montante, lesquels canaux sont transmis en alternance à intervalles réguliers.

7. Procédé selon la revendication 1 ou 6,
**caractérisé par le fait que** d'autres stations de base à ajouter se synchronisent sur le ou les canaux de synchronisation ayant la plus forte intensité de champ en réception ou puissance d'émission selon la trame temporelle.

8. Procédé selon l'une des revendications 1, 6 ou 7,
**caractérisé par le fait que** chacune des stations de base comporte un générateur aléatoire interne qui déclenche pour la station de base respective un échange de fonction ou un échange d'occupation de créneaux temporels pour le canal de synchronisation et pour le canal à accès aléatoire, ce qui permet une nouvelle synchronisation en cas de panne de la station de référence de synchronisation.

9. Procédé selon l'une des revendications 1, 6 à 8 ou selon la revendication 5,
**caractérisé par le fait que**, dans un canal prédéterminé, les stations de base transmettent des informations sur des codes CDMA déjà utilisés, ces informations étant exploitables par les stations mobiles et de base concernées pour minimiser les interférences.
